# EUROPÄISCHE PATENTSCHRIFT

(11) **EP 2 664 420 B1**
(45) Veröffentlichungstag und Bekanntmachung des Hinweises auf die Patenterteilung: **06.04.2022**
(21) Anmeldenummer: 13166764.4
(22) Anmeldetag: 07.05.2013
(51) Int. Cl.: B25J 9/16, B25J 5/00

(54) **Verfahren zum Ermitteln möglicher Positionen eines Roboterarms**
Method for determining possible positions of a robot arm
Procédé de détermination des positions possibles d'un bras robotisé

(30) Priorität: 15.05.2012 DE 102012208094
(43) Veröffentlichungstag der Anmeldung: 20.11.2013
(73) Patentinhaber: KUKA Deutschland GmbH, 86165 Augsburg (DE)
(72) Erfinder: Sharma, Shashank, 86153 Augsburg (DE); Scheurer, Christian, 86150 Augsburg (DE); Zimmermann, Uwe E., 86152 Augsburg (DE)
(74) Vertreter: Böss, Dieter Alexander

(56) Entgegenhaltungen:
- EP-A2- 1 090 723
- EP-A2- 1 107 082
- AARNO D ET AL: "Constrained path planning and task-consistent path adaptation for mobile manipulators", ADVANCED ROBOTICS, 2005. ICAR '05. PROCEEDINGS., 12TH INTERNATIONAL CO NFERENCE ON SEATLE, WA, USA JULY 18-20, 2005, PISCATAWAY, NJ, USA,IEEE, 18. Juli 2005 (2005-07-18), Seiten 268-273, XP010835287, DOI: 10.1109/.2005.1507423 ISBN: 978-0-7803-9178-9
- BERENSON D ET AL: "An optimization approach to planning for mobile manipulation", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19. Mai 2008 (2008-05-19), Seiten 1187-1192, XP031340309, ISBN: 978-1-4244-1646-2
- J.W. Burdick: "On the inverse kinematics of redundant manipulators: characterization of the self-motion manifolds", PROCEEDINGS OF THE INTERNATIONAL CONFERENCE ON ROBOTICS AND AUTOMATION. SCOTTSDALE, MAY 15 - 19, 1989., 1 January 1989 (1989-01-01), pages 264-270, XP055701259, US DOI: 10.1109/ROBOT.1989.99999 ISBN: 978-0-8186-1938-0

## Beschreibung

Die Erfindung betrifft ein Verfahren zum Ermitteln möglicher Positionen eines Roboterarms.

Die US 5,550,953 offenbart einen mobilen Roboter und ein Verfahren zum Betreiben des mobilen Roboters. Der mobile Roboter umfasst einen Roboterarm mit mehreren, relativ zueinander bewegbaren Gliedern und ein Trägerfahrzeug, an dem der Roboterarm befestigt ist. Mittels des Trägerfahrzeugs kann die Position des Roboterarms als solcher verändert werden.

Das Dokument AARNO D ET AL "Constrained path planning and task-consistent path adaptation for mobile manipulators", Proc. ICAR ,05, Seiten 268-273 offenbart eine mobile Fahrplattform und einen auf der mobile Fahrplattform angeordneten Roboterarm, der mittels der mobilen Fahrplattform in einem Raum fortbewegt werden kann.

Die EP 1 107 082 A2 offenbart ein Verfahren zur Bestimmung einer annehmbaren Position für die Basis eines Roboterarms.

Aufgabe der Erfindung ist es, ein verbessertes Verfahren zum Ermitteln möglicher Positionen eines Roboterarms anzugeben.

Die Aufgabe der Erfindung wird gelöst durch ein Verfahren zum Eingrenzen möglicher Positionen eines Roboterarms eines Roboters, wobei der Roboterarm ein Gestell, mehrere, hintereinander angeordnete, bezüglich Achsen relativ zueinander bewegbare Glieder und Antriebe zum Bewegen der Glieder umfasst, wobei der Roboter als ein mobiler Roboter ausgebildet ist, der eine mobile Trägervorrichtung mit Antrieben zum Bewegen der Trägervorrichtung aufweist, an der der Roboterarm mit seinem Gestell befestigt ist und wobei die mobile Trägervorrichtung als ein Trägerfahrzeug mit Rädern ausgebildet ist und die Antriebe der mobilen Trägervorrichtung eingerichtet sind, die Räder zu bewegen, aufweisend folgende Verfahrensschritte:
- Festlegen einer Soll-Position und Soll-Orientierung im Raum eines dem Roboterarm oder eines am Roboterarm befestigten Endeffektors zugeordneten Tool Center Points, dem ein Referenzkoordinatensystem mit Polarkoordinaten zugeordnet ist,
   - Bestimmen der aufgrund der Geometrie des Roboterarms potenziell möglichen Positionen des Gestells des Roboterarms im Raum und in den Polarkoordinaten des Referenzkoordinatensystems, sodass der Tool Center Point die festgelegte Soll-Position und Soll-Orientierung einzunehmen vermag,
- Ermitteln der möglichen Positionen des Gestells des Roboterarms basierend auf den ermittelten potenziell möglichen Positionen und auf wenigstens einer, die potenziell möglichen Positionen des Gestells einschränkenden Randbedingung, wobei die die potenziell möglichen Positionen des Gestells einschränkende Randbedingung eine mögliche Position oder Lage der Trägervorrichtung darstellt, dadurch gekennzeichnet, dass ein 3-Tupel (ρ1, ρ2, ρ3) die möglichen Lagen des Trägerfahrzeugs mittels der Polarkoordinaten (ρ1, ρ2) und mittels der Drehung (ρ3) des Trägerfahrzeugs (2) im Referenzkoordinatensystem (KRef) beschreibt, wobei
die erste Polarkoordinate des Referenzkoordinatensystem die Entfernung des Trägerfahrzeugs vom Ursprung des Referenzkoordinatensystems beschreibt, die zweite Polarkoordinate des Referenzkoordinatensystem die Anfahrtsrichtung des Trägerfahrzeugs auf einem Entfernungskreis mit dem Radius ρ1 beschreibt, und die Drehung die Orientierung des Trägerfahrzeugs bezüglich dem Referenzkoordinatensystem beschreibt.

Mittels des erfindungsgemäßen Verfahrens können z.B. mögliche Aufstellpositionen des Roboterarms beispielsweise innerhalb einer Roboterzelle gefunden bzw. geplant werden. Dazu werden erfindungsgemäß die Soll-Position und die Soll-Orientierung, also die Soll-Lage bzw. Soll-Pose des Tool Center Points des Roboterarms oder des am Roboterarm befestigten Endeffektors bestimmt. Anschließend werden die potenziell möglichen Positionen des Gestells, beispielsweise die potenziell möglichen Aufstellorte des Roboterarms in Polarkoordinaten für Positionen in der Ebene (2D) bzw. Kugelkoordinaten für Positionen im Raum (z.B. bei 3-Achs-Portalen) des dem Tool Center Point zugeordneten Referenzkoordinatensystems bestimmt.

Die potenziell möglichen Positionen des Roboterarms liegen insbesondere innerhalb einer Kugel, deren Mittelpunkt der Tool Center Point in seiner Soll-Position ist. Die Polarkoordinaten sind vorzugsweise Kugelkoordinaten.

Die Soll-Position und die Soll-Orientierung des Tool Center Points können zunächst in Koordinaten des feststehenden Weltkoordinatensystems festgelegt werden.

In der Regel kann der Roboterarm nicht an allen potenziell möglichen Positionen platziert werden. Gemäß einer Ausführungsform des erfindungsgemäßen Verfahrens weist dieses zusätzlich folgenden Verfahrensschritt auf:
Ermitteln der möglichen Positionen des Gestells des Roboterarms basierend auf den ermittelten potenziell möglichen Positionen und auf wenigstens einer, die potenziell möglichen Positionen des Gestells einschränkenden Randbedingung. Die möglichen Positionen sind dann z.B. die Schnittmenge des Inneren der die potenziell möglichen Positionen beschreibenden Kugel mit der wenigstens einen einschränkenden Randbedingung.

Eine, die potenziell möglichen Positionen des Gestells einschränkende Randbedingung ist z.B. eine mögliche Fläche, an der oder auf der es dem Gestell des Roboterarms möglich ist, befestigt zu werden. Die Fläche ist z.B. ein Boden beispielsweise einer Roboterzelle, auf dem der Roboterarm mit seinem Gestell befestigt werden soll.

Der Roboter ist als ein mobiler Roboter ausgebildet, der eine mobile Trägervorrichtung mit Antrieben zum Bewegen der Trägervorrichtung aufweist, an dem der Roboterarm mit seinem Gestell befestigt ist. Die die potenziell möglichen Positionen des Gestells einschränkende Randbedingung stallt dann z.B. eine mögliche Position oder Lage der Trägervorrichtung dar.

Die mobile Trägervorrichtung ist als ein Trägerfahrzeug mit Rädern ausgebildet, wobei die Antriebe der mobilen Trägervorrichtung eingerichtet sind, die Räder zu bewegen. Der erfindungsgemäße mobile Roboter kann auch als ein humanoider Roboter ausgeführt sein, dessen mobile Trägervorrichtung als Roboterbeine ausgeführt ist.

Bei konventionellen mobilen Robotern werden die plattformspezifischen kinematischen Redundanzen des Gesamtsystems mit den Koordinaten des Weltkoordinatensystems in der 2D Ebene aufgelöst.

Das Trägerfahrzeug ist vorzugsweise als ein omnidirektional bewegbares Trägerfahrzeug (holonome Plattform) ausgeführt. Vorzugsweise sind daher die Räder des Trägerfahrzeugs als omnidirektionale Räder ausgebildet. Ein Beispiel eines omnidirektionalen Rades ist das dem Fachmann bekannte Mecanum-Rad. Aufgrund der omnidirektionalen Räder ist es dem erfindungsgemäßen mobilen Roboter bzw. dessen Trägerfahrzeug ermöglicht, sich frei im Raum zu bewegen. So kann sich das Trägerfahrzeug nicht nur nach vorne, nach hinten oder seitlich bewegen oder Kurven fahren, sondern sich auch z.B. um eine vertikal ausgerichtete Achse drehen.

Nach einer weiteren Variante des erfindungsgemäßen Verfahrens umfasst dieses zusätzlich ein Bestimmen der potenziell möglichen Positionen des Gestells in Koordinaten des feststehenden Weltkoordinatensystems basierend auf den Polarkoordinaten des Referenzkoordinatensystems.

Vorteile des erfindungsgemäßen Verfahrens können folgende sein:
Eine gezielte Iteration über Nullraumlösungen können gegeben werden, da Lösungsintervalle für Redundanzen zurückgegeben werden können.

Es kann eine Lösung für die Platzierung eines Roboterarms in einer Roboterzelle bei Betrachtung der durchzuführenden Aufgabe, also der Soll-Lage des Tool Center Points, gefunden werden. Dementsprechend kann auch eine Positionierung des Trägerfahrzeugs bzw. der mobilen Trägervorrichtung bei mobilen Robotern gefunden werden.

Gegebenenfalls kann einen Linearachsenstellung oder Portalstellung in einer inversen Kinematik als minimale und maximale Linearachsstellung anstelle des ganzen Wertebereichs der Linearachse/des Portals angegeben werden.

Es kann eine Bestimmung der Intervallgrenzen der Redundanzen abhängig vom Robotersystem ermöglicht werden.

Redundanzen sind hier auf ein lokales Referenzsystem, insbesondere dem Tool Center Point Koordinatensystem oder im Allgemeinen auf ein Aufgabenkoordinatensystem bezogen.

Ausführungsbeispiele der Erfindung sind exemplarisch in den beigefügten schematischen Zeichnungen dargestellt. Es zeigen:
- Fig. 1: einen mittels einer Linearachse bewegbaren Roboterarm, dem ein Tool Center Point zugeordnet ist,
- Fig. 2: Ein Diagramm zum Veranschaulichen verschiedener Positionen des Roboterarms für dieselbe Pose seines Tool Center Points,
- Fig. 3: einen mobilen Roboter, der ein Trägerfahrzeug und einen am Trägerfahrzeug befestigten Roboterarm umfasst,
- Fig. 4: ein omnidirektionales Rad, und

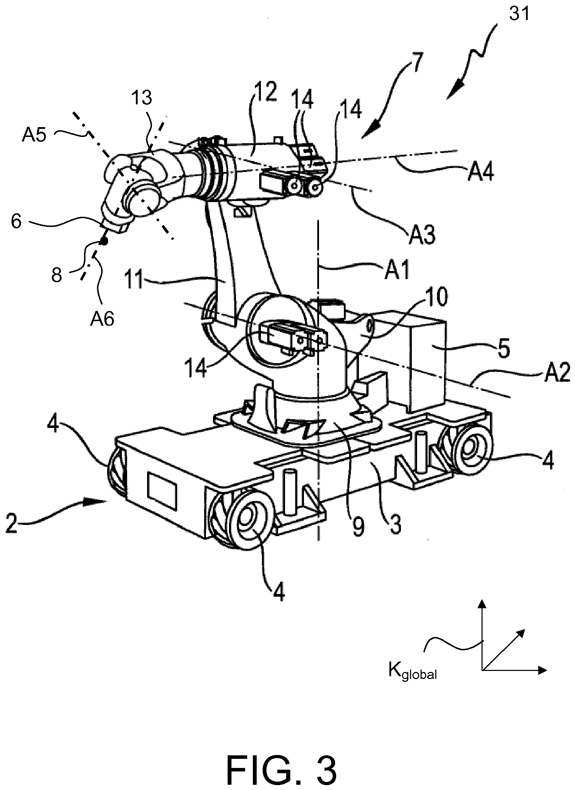

- Fig. 3: ein die Bestimmung der Lage des Trägerfahrzeugs veranschaulichendes Diagramm.

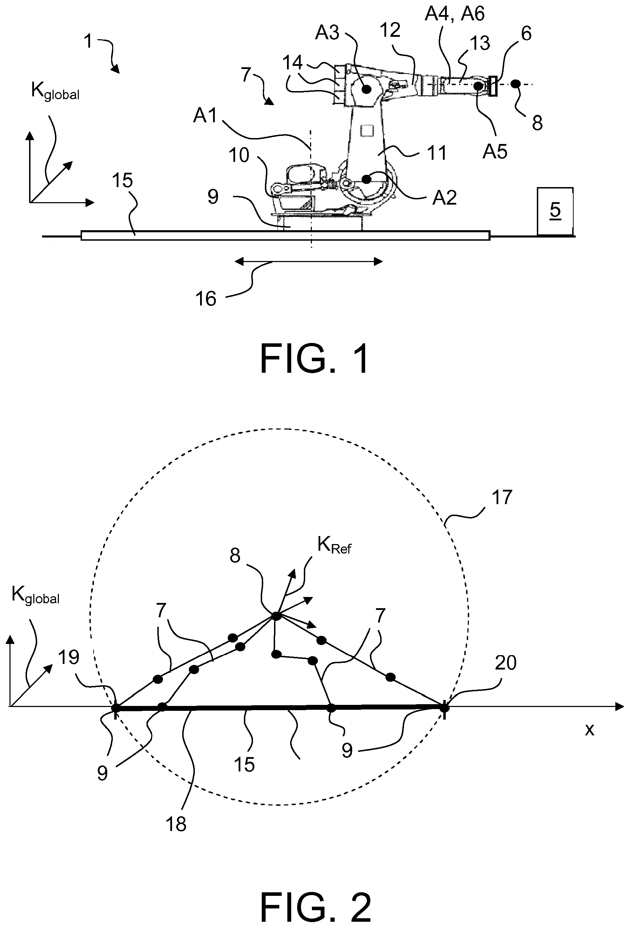

Die Fig. 1 zeigt einen Roboter 1 mit einem Roboterarm 7. Der Roboterarm 7 umfasst mehrere, nacheinander angeordnete und mittels Gelenke verbundene Glieder. Bei den Gliedern handelt es sich insbesondere um ein Gestell 9, mittels dem der Roboterarm 7 am Fahrzeuggrundkörper 3 befestigt ist.

Der Roboterarm 7 weist als ein weiteres Glied ein z.B. relativ zum Gestell 9 insbesondere um die vertikal verlaufende Achse A1 drehbar gelagertes Karussell 10 auf. Weitere Glieder des Roboterarms 7 sind im Falle des vorliegenden Ausführungsbeispiels eine Schwinge 11, ein Ausleger 12 und eine vorzugsweise mehrachsige Roboterhand 13 mit einer als z.B. Flansch ausgeführten Befestigungsvorrichtung 6 zum Befestigen eines Endeffektors bzw. eines Werkzeugs. Die Schwinge 11 ist am unteren Ende z.B. an einem nicht näher dargestellten Schwingenlagerkopf auf dem Karussell 10 um eine vorzugsweise horizontale Achse A2 schwenkbar gelagert. Am oberen Ende der Schwinge 11 ist wiederum um eine ebenfalls vorzugsweise horizontale Achse A3 der Ausleger 12 schwenkbar gelagert. Dieser trägt endseitig die Roboterhand 13 mit ihren beispielsweisen drei Drehachsen (Achsen A4-A6). Die Roboterhand 13 kann aber auch nur zwei Drehachsen aufweisen.

Der Roboterarm 7 umfasst ferner mit einer Steuervorrichtung 5 des Roboters 1 verbundene Antriebe. Die Antriebe sind im Falle des vorliegenden Ausführungsbeispiels elektrische Antriebe, insbesondere geregelte elektrische Antriebe. In der Figur 1 sind nur einige der elektrischen Motoren 14 dieser elektrischen Antriebe gezeigt.

Im Falle des vorliegenden Ausführungsbeispiels umfasst der Roboter 1 eine z.B. am Boden angeordnete Längsschiene 15, auf der der Roboterarm 7 mit seinem Gestell 9 horizontal in Richtung eines Doppelpfeils 16 verschieblich gelagert ist. Die Längsschiene 15 stellt somit eine Linearachse dar, entlang der Roboterarm 7, insbesondere gesteuert durch die Steuervorrichtung 5 und mittels eines weiteren, nicht näher dargestellten Antriebs, in Richtung des Doppelpfeils 16 verschoben werden kann. Dieser Antrieb ist vorzugsweise ein elektrischer Antrieb, insbesondere ein geregelter elektrischer Antrieb.

Im Betrieb des Roboters 1 ist es vorgesehen, dass die Steuervorrichtung 5 die Antriebe derart ansteuert, sodass die Befestigungsvorrichtung 6 bzw. ein der Befestigungsvorrichtung 6 bzw. des an der Befestigungsvorrichtung 6 befestigten Endeffektors zugeordneter sogenannter Tool Center Point 8 eine vorgegebene Soll-Lage bzw. Soll-Pose, also eine Soll-Position und Soll-Orientierung im Raum einnimmt. Dazu wird der Roboterarm 7 längs der Längsschiene 15, gesteuert durch die Steuervorrichtung 5, entsprechend dieser Soll-Pose in eine Position und die Achsen A1-A6 des Roboterarms 7 in entsprechende Achsstellungen bzw. Winkelstellungen θ1-θ6 gebracht.

Im Falle des vorliegenden Ausführungsbeispiels handelt es sich bei dem Roboter 1 um einen redundanten Roboter, d.h. für ein und dieselbe Pose des Tool Center Points 8 sind mehrere Achsstellungen bzw. Winkelstellungen θ1-θ6 des Roboterarms 7 und mehrere Positionen des Gestells 9 des Roboterarms 7 potenziell möglich. Dies ist in der Fig. 2 veranschaulicht.

Im Falle des vorliegenden Ausführungsbeispiels ist dem Tool Center Point 8 ein Koordinatensystem, d.h. ein Referenzkoordinatensystem K_{Ref} zugeordnet, das in der Fig. 2 gezeigt ist. Der Ursprung des Referenzkoordinatensystem K_{Ref} liegt insbesondere im Tool Center Point 8.

Im Falle des vorliegenden Ausführungsbeispiels wird nun ein Bereich ermittelt, in dem der Roboterarm 7 bzw. dessen Gestell 9 theoretisch aufgrund der Geometrie des Roboterarms 7 positioniert werden kann, sodass der Tool Center Point 8 in einer Soll-Pose, d.h. Soll-Position und Soll-Orientierung ausgerichtet werden kann. Diese potenziell möglichen Positionen des Gestells 9 des Roboterarms 7 werden jedoch nicht in Koordinaten eines feststehenden Weltkoordinatensystems K_{global} beschrieben, sondern zunächst in Polarkoordinaten des Referenzkoordinatensystems K_{Ref}.

Im Falle des vorliegenden Ausführungsbeispiels ergibt sich somit für den oben genannten Bereich, d.h. den potenziell möglichen Positionen, das Innere einer Kugel 17, dessen Mittelpunkt der Ursprung des Referenzkoordinatensystems K_{Ref} für die Soll-Pose des Tool-Center Points 8.

Im Falle des vorliegenden Ausführungsbeispiels ist der Roboterarm 7 mittels der Längsschiene 15 linear bewegbar. Deshalb kann das Gestell 9 des Roboterarms 7 nicht innerhalb der gesamten Kugel 17 positioniert werden, sondern nur innerhalb eines Redundanzbereichs 18, dessen Länge der Strecke entspricht, entlang der der Roboterarm 7 mittels der Längsschiene 15 längs verschiebbar ist. Aufgrund der der Längsschiene 15 zugeordneten Linearachse, bezüglich derer der Roboterarm 7 mit seinem Gestell 9 längs des Doppelpfeils 16 verschoben werden kann, sind die potenziell möglichen Positionen des Gestells 9 eingeschränkt. Die Längsschiene 15 bedingt somit eine, die potenziell möglichen Positionen des Gestells 9 einschränkende Randbedingung.

Ist beispielsweise die Linearachse bzw. die Längsschiene 15 in Richtung der x-Komponenten des Weltkoordinatensystems K_{glo-bal} ausgerichtet, d.h. lässt sich das Gestell 9 in Richtung der x-Komponenten des Weltkoordinatensystems K_{global} verschieben, so ergibt sich ein Redundanzwertebereich 18 mit einem minimalen Redundanzwert 19 und einem maximalen Redundanzwert 20, zwischen denen der Roboterarm 7 verschoben werden kann und die Achsstellungen bzw. Winkelstellungen θ1-θ6 derart einstellbar sind, sodass der Tool Center Point 8 die Soll-Pose einnehmen kann.

Redundanzwerte, welche der Roboterarm 7 bzw. dessen Gestell 9 einnehmen kann, ergeben sich insbesondere durch einen Schnitt der der Linearschiene 15 zugeordneten Linearachse mit der Kugel 17. Falls auch eine Platzierung der Längsschiene 15 z.B. am Boden gesucht wird, dann ergibt der Schnitt der Kugel 17 mit dem Boden eine Kreisfläche auf dem Boden.

Vor dem Schnitt mit der Kugel 17 wird diese vorzugsweise in Koordinaten des Weltkoordinatensystems K_{global} umgerechnet.

Im Falle des vorliegenden Ausführungsbeispiels weist der Roboterarm sechs Achsen A1-A6 auf. Demnach gibt es bis zu acht verschiedene Möglichkeiten (Status), eine Tool Center Point 8 Position zu erreichen. Diese beschreiben jedoch keinen kontinuierlichen, zusammenhängenden Nullraum.

Mit der der Längsschiene 15 zugeordneten Linearachse erhält der gesamte Roboter 1 einen weiteren Freiheitsgrad, also eine weitere Redundanz, mit der eine Nullraumbewegung möglich wird. Damit ergibt sich eine zusätzliche kinematische Redundanz, die auch kontinuierlich und zusammenhängend ist und zusätzlich auf den Redundanzwertebereich 18 (minimaler Redundanzwert 19 und maximaler Redundanzwert 20) begrenzt ist. Dabei liegen der minimale und der maximale Redundanzwert 19, 20 innerhalb der gültigen Grenzen der gesamten Linearachse. Soweit keine Achsgrenzen betrachtet werden, existiert für den gesamten Redundanzwertebereich 18 eine Lösung der analytisch formulierten inversen Kinematik.

Es können auch mehrere Linearachsen vorgesehen sein, die z.B. in Form eines sogenannten Portals bzw. Gantry erreicht werden. Das Portal ist z.B. an einer Decke befestigt. An dem Portal ist der Roboterarm 7 mittels seines Gestells 9 befestigt. Mittels des Portals kann das Gestell 9 des Roboterarms 7 entlang der Decke bezüglich zwei Linearachsen verfahren werden. Zusätzlich kann es noch vorgesehen sein, dass das Portal derart ausgeführt ist, dass der Roboterarm 7 mit seinem Gestell 9 auch entlang einer rechtwinklig zur Decke ausgerichteten Linearachse hoch und runter bewegt werden kann.

Das beschriebene Verfahren lässt sich auch anwenden, um den Bereich zu ermitteln, in dem das Gestell 9 des Roboterarms 7 aufgestellt werden kann, sodass der Tool Center Point 8 die Soll-Pose einnehmen kann. Der mögliche Bereich, z.B. Boden, auf dem das Gestell 9 aufgestellt werden kann, stellt somit eine, die potenziell möglichen Positionen des Gestells 9 einschränkenden Randbedingung dar.

Die Fig. 3 zeigt einen weiteren Roboter 31. Wenn nicht anders beschrieben, dann sind Bestandteile des in der Fig. 3 gezeigten Roboters 31, die mit Bestandteilen des in der Fig. 1 gezeigten Roboters 1 im Wesentlichen bau- und funktionsgleich sind, mit denselben Bezugszeichen versehen.

Der in der Fig. 3 gezeigte Roboter 31 unterscheidet sich im Wesentlichen von dem in der Fig. 1 gezeigten Roboter 1 dadurch, dass der in der Fig. 3 dargestellte Roboter 31 keine Längsschiene 15 aufweist. Dafür ist der in der Fig. 3 gezeigte Roboter 31 als ein mobiler Roboter 31 ausgeführt, welcher im Falle des vorliegenden Ausführungsbeispiels ein omnidirektional bewegbares Trägerfahrzeug 2 aufweist. Dieses umfasst z.B. einen Fahrzeuggrundkörper 3 und mehrere, am Fahrzeuggrundkörper 3 drehbar angeordnete Räder 4, welche insbesondere als omnidirektionale Räder ausgebildet sind. Im Falle des vorliegenden Ausführungsbeispiels weist das Trägerfahrzeug 2 vier omnidirektionale Räder 4 auf. Wenigstens eines der Räder 4, vorzugsweise alle Räder 4 wird bzw. werden mit einem oder mehreren Antrieben angetrieben. Die nicht näher dargestellten Antriebe sind vorzugsweise elektrische Antriebe, insbesondere geregelte elektrische Antriebe und sind mit der beispielsweise im oder am Fahrzeuggrundkörper 3 angeordneten Steuervorrichtung 5 verbunden, welche eingerichtet ist, das Trägerfahrzeug 2 durch entsprechendes Ansteuern der Antriebe für die Räder 4 zu bewegen.

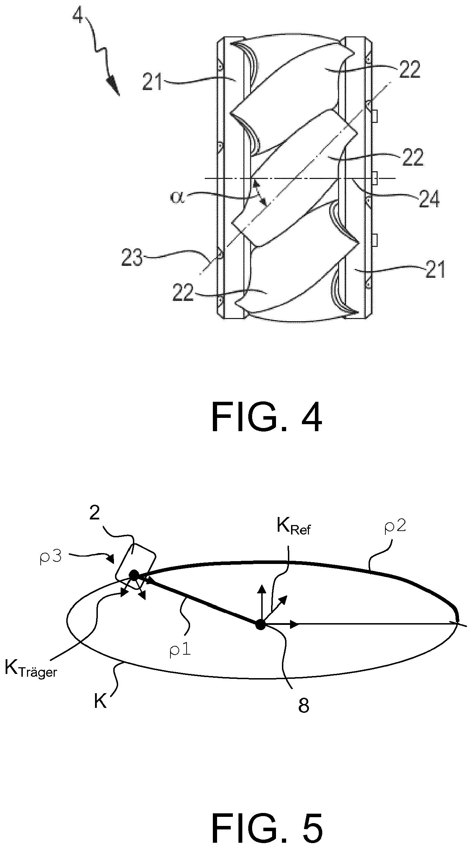

Ein Beispiel eines omnidirektionalen Rades ist das sogenannte Mecanum-Rad. Ein als omnidirektionales Rad ausgebildetes Rad 4 des mobilen Roboters 1 bzw. dessen Trägerfahrzeugs 2 ist in der Fig. 4 als Frontansicht gezeigt.

Das als omnidirektionales bzw. Mecanum Rad ausgebildete Rad 4 weist im Falle des vorliegenden Ausführungsbeispiels zwei starr miteinander verbundene Radscheiben 21 auf, zwischen denen mehrere Rollkörper 22 bezüglich ihrer Längsachsen 23 drehbar gelagert sind. Die beiden Radscheiben 21 können bezüglich einer Drehachse 24 drehbar gelagert sein und mittels einer der Antriebe des Trägerfahrzeugs 2 derart angetrieben werden, dass sich die beiden Radscheiben 21 bezüglich der Drehachse 24 drehen.

Im Falle des vorliegenden Ausführungsbeispiels sind die Rollkörper 22 gleichmäßig zueinander beabstandet und derart an den Radscheiben 21 gelagert, dass ihre Rollflächen über den Umfang der Radscheiben 21 herausragen. Außerdem sind die Rollkörper 22 derart an den Radscheiben 21 gelagert, dass ihre Längsachsen 23 mit der Drehachse 24 einen Winkel α von beispielsweise 45° aufweisen.

Aufgrund der omnidirektionalen Räder 4 ist es dem mobilen Roboter 31 bzw. dessen Trägerfahrzeug 2 ermöglicht, sich frei im Raum zu bewegen. So kann sich das Trägerfahrzeug 2 nicht nur nach vorne, nach hinten oder seitlich bewegen oder Kurven fahren, sondern sich auch um eine beliebige vertikal ausgerichtete Achse beispielsweise um die Achse A1 des Roboterarms drehen.

Der mobile Roboter 31 umfasst ferner einen Roboterarm 7, der insbesondere am Trägerfahrzeug 2 bzw. an dessen Fahrzeuggrundkörper 3 befestigt ist. Aufgrund der omnidirektionalen Räder 4 stellt das Trägerfahrzeug 2 somit im Falle des vorliegenden Ausführungsbeispiels eine holonome Plattform für den Roboterarm 7 dar. Das Trägerfahrzeug 2 kann aber auch als eine nicht-holonome Plattform für den Roboterarm 7 ausgeführt sein. Das Trägerfahrzeug 2 stellt somit eine mobile Trägervorrichtung dar, an der der Roboterarm 7 befestigt ist. Ist der mobile Roboter z.B. als humanoider oder insektenähnlicher Roboter ausgebildet, dann kann beispielsweise diese Trägervorrichtung auch als mehrere Roboterbeine ausgebildet sein, mittels derer der Roboter bewegbar ist.

Im Betrieb des mobilen Roboters 31 ist es vorgesehen, dass die Steuervorrichtung 5 die Antriebe des Roboterarms 7 und der Räder 4 derart ansteuert, sodass die Befestigungsvorrichtung 6 bzw. der Tool Center Point 8 eine vorgegebene Soll-Lage bzw. Soll-Pose, also eine Soll-Position und Soll-Orientierung im Raum einnimmt. Dazu wird das Trägerfahrzeug 2, gesteuert durch die Steuervorrichtung 5, entsprechend dieser Soll-Pose in eine Position gebracht und in eine Orientierung im Raum ausgerichtet und die Achsen A1-A6 des Roboterarms 7 in entsprechende Achsstellungen bzw. Winkelstellungen θ1-θ6 gebracht.

Im Falle des vorliegenden Ausführungsbeispiels ergibt sich als Bereich, innerhalb dem der Roboterarm 7 aufgrund seiner Geometrie theoretisch aufgestellt werden kann, sodass der Tool Center Point 8 die Soll-Pose einnehmen kann, das Innere der Kugel 17, deren Mittelpunkt der Ursprung des Referenzkoordinatensystems K_{Ref} für die Soll-Pose des Tool-Center Points 8 ist.

Im Falle des vorliegenden Ausführungsbeispiels ist der Roboterarm 7 mittels des Trägerfahrzeugs 2 bewegbar. Deshalb kann das Gestell 9 des Roboterarms 7 nicht innerhalb der gesamten Kugel 17 positioniert werden, sondern nur innerhalb eines Redundanzwertebereichs, welcher sich durch einen Schnitt der Kugel 17 mit einer Ebene, die durch den Boden, auf dem sich das Trägerfahrzeug bewegt, bestimmt ist. Dadurch ergibt sich als möglicher Redundanzwertebereich eine Kreisfläche auf dem Boden.

Erfindugnsgemäß werden auch die mögliche Lagen des Trägerfahrzeugs 2, also dessen Positionen und Orientierungen, die das Trägerfahrzeug 2 einnehmen kann, damit der Tool Center Point 8 seine Soll-Pose einnimmt, in den Polarkoordinaten ρ1, ρ2 des Referenzkoordinatensystems K_{Ref} ausgedrückt.

Somit wird ein 3-Tupel (ρ1, ρ2, ρ3) bestimmt, welches die möglichen Lagen des Trägerfahrzeugs 2 mittels der Polarkoordinaten ρ1, ρ2 im lokalen Referenzkoordinatensystem K_{Ref} beschreibt.

Dabei beschreiben die Polarkoordinaten ρ1, p2 die Position bezüglich des Referenzkoordinatensystems K_{Ref} in zweidimensionalen Polarkoordinaten und zusätzliche die Drehung p3 des Trägerfahrzeugs 2.

Also beschreibt die Polarkoordinate ρ1 die Entfernung des Trägerfahrzeugs 2 vom Ursprung des Referenzkoordinatensystems K_{Ref}, die Polarkoordinate p2 die Anfahrtrichtung des Trägerfahrzeugs 2 auf einem Entfernungskreis K mit dem Radius ρ1, und die Drehung ρ3 die Orientierung des Trägerfahrzeugs 2 bezüglich dem Referenzkoordinatensystem K_{Ref}. Der Ursprung eines Trägerfahrzeug-Koordinatensystems K_{Träger} liegt vorzugsweise im Ursprung eines dem Roboterarm 7 zugeordneten Koordinatensystems, sodass vorzugsweise eine Drehachse des Trägerfahrzeugs 2 mit der Achse A1 des Roboterarms 7, bezüglich derer das Karussell 10 relativ zum Gestell 9 drehbar ist, zusammen fällt.

## Patentansprüche

1. Verfahren zum Eingrenzen möglicher Positionen eines Roboterarms (7) eines Roboters (1, 31), wobei der Roboterarm (7) ein Gestell (9), mehrere, hintereinander angeordnete, bezüglich Achsen (A1-A6) relativ zueinander bewegbare Glieder (9-13) und Antriebe zum Bewegen der Glieder (9-13) umfasst, wobei der Roboter (1, 31) als ein mobiler Roboter (31) ausgebildet ist, der eine mobile Trägervorrichtung (2) mit Antrieben zum Bewegen der Trägervorrichtung aufweist, an der der Roboterarm (7) mit seinem Gestell (9) befestigt ist und wobei die mobile Trägervorrichtung (2) als ein Trägerfahrzeug mit Rädern (4) ausgebildet ist und die Antriebe der mobilen Trägervorrichtung (2) eingerichtet sind, die Räder (4) zu bewegen, aufweisend folgende Verfahrensschritte:
- Festlegen einer Soll-Position und Soll-Orientierung im Raum eines dem Roboterarm (7) oder eines am Roboterarm (7) befestigten Endeffektors zugeordneten Tool Center Points (8), dem ein Referenzkoordinatensystem (K_{Ref}) mit Polarkoordinaten (ρ1, ρ2) zugeordnet ist,
- Bestimmen der aufgrund der Geometrie des Roboterarms (7) potenziell möglichen Positionen des Gestells (9) des Roboterarms (7) im Raum und in den Polarkoordinaten (ρ1, ρ2) des Referenzkoordinatensystems (K_{Ref}), sodass der Tool Center Point (8) die festgelegte Soll-Position und Soll-Orientierung einzunehmen vermag,
- Ermitteln der möglichen Positionen des Gestells (9) des Roboterarms (7) basierend auf den ermittelten potenziell möglichen Positionen und auf wenigstens einer, die potenziell möglichen Positionen des Gestells (9) einschränkenden Randbedingung, wobei die die potenziell möglichen Positionen des Gestells (9) einschränkende Randbedingung eine mögliche Position oder Lage der Trägervorrichtung (2) darstellt, **dadurch gekennzeichnet, dass**
ein 3-Tupel (ρ1, ρ2, ρ3) die möglichen Lagen des Trägerfahrzeugs mittels der Polarkoordinaten (ρ1, ρ2) und mittels der Drehung (ρ3) des Trägerfahrzeugs (2) im Referenzkoordinatensystem (K_{Ref}) beschreibt, wobei die erste Polarkoordinate (ρ1) des Referenzkoordinatensystem (K_{Ref}) die Entfernung des Trägerfahrzeugs vom Ursprung des Referenzkoordinatensystems (K_{Ref}) beschreibt, die zweite Polarkoordinate (ρ2) des Referenzkoordinatensystem (K_{Ref}) die Anfahrtsrichtung des Trägerfahrzeugs auf einem Entfernungskreis (K) mit dem Radius ρ1 beschreibt, und die Drehung (ρ3) die Orientierung des Trägerfahrzeugs bezüglich dem Referenzkoordinatensystem (K_{Ref}) beschreibt.

2. Verfahren nach Anspruch 1, zusätzlich aufweisend Festlegen der Soll-Position und der Soll-Orientierung des Tool Center Points (8) in Koordinaten eines feststehenden Weltkoordinatensystems (K_{global}).

3. Verfahren nach Anspruch 1 oder 2, bei dem die potenziell möglichen Positionen innerhalb einer Kugel (17) liegen, deren Mittelpunkt der Tool Center Point (8) in seiner Soll-Position ist.

4. Verfahren nach einem der Ansprüche 1 bis 3, bei dem die wenigstens eine, die potenziell möglichen Positionen des Gestells (9) einschränkende Randbedingung eine mögliche Fläche ist, an der oder auf der es dem Gestell (9) des Roboterarms möglich ist, befestigt zu werden.

5. Verfahren nach einem der Ansprüche 1 bis 4, zusätzlich aufweisend Bestimmen der potenziell möglichen Positionen des Gestells (9) in Koordinaten des feststehenden Weltkoordinatensystems (K_{global}) basierend auf den Polarkoordinaten (ρ1, ρ2) des Referenzkoordinatensystems (K_{Ref}).

## Claims

1. Method for limiting possible positions of a robot arm (7) of a robot (1, 31), the robot arm (7) comprising a base (9), a plurality of links (9-13) arranged one behind the other and movable relative to each other with respect to axes (A1-A6), and drives for moving the links (9-13), wherein the robot (1, 31) is designed as a mobile robot (31) comprising a mobile carrier device (2) with drives for moving the carrier device, to which the robot arm (7) is attached with its base (9) and wherein the mobile carrier device (2) is designed as a carrier vehicle with wheels (4) and the drives of the mobile carrier device (2) are arranged to move the wheels (4), comprising the following method steps:
- Presetting a target position and target orientation in the space of a tool center point (8) assigned to the robot arm (7) or to an end effector attached to the robot arm (7), to which tool center point (8) a reference coordinate system (K_{Ref}) with polar coordinates (p1, p2) is assigned,
- Assigning the potentially possible positions of the base (9) of the robot arm (7) in space and in the polar coordinates (p1, p2) of the reference coordinate system (K_{Ref}) based on the geometry of the robot arm (7), in such a way that the tool center point (8) is able to reach the specified target position and target orientation,
- Determining the possible positions of the base (9) of the robot arm (7) based on the assigned potentially possible positions and on at least one constraint limiting the potentially possible positions of the base (9), wherein the constraint limiting the potentially possible positions of the base (9) represents a possible position or orientation of the carrier device (2), **characterized in that**
a 3-tuple (p1, p2, p3) describes the possible positions of the carrier vehicle by means of the polar coordinates (p1, p2) and by means of the rotation (p3) of the carrier vehicle in the reference coordinate system (K_{Ref}), wherein
the first polar coordinate (ρ1) of the reference coordinate system (K_{Ref}) describes the distance of the carrier vehicle from the origin of the reference coordinate system (K_{Ref}), the second polar coordinate (p2) of the reference coordinate system (K_{Ref}) describes the approach direction of the carrier vehicle on a distance circle (K) with the radius ρ1, and the rotation (ρ3) describes the orientation of the carrier vehicle with respect to the reference coordinate system (K_{Ref}).

2. Method according to claim 1, additionally comprising presetting the target position and the target orientation of the tool center point (8) in coordinates of a fixed world coordinate system (K_{global}).

3. Method according to claim 1 or 2, wherein the potentially possible positions are located within a sphere (17), the center of which is the tool center point (8) in its target position.

4. Method according to one of claims 1 to 3, wherein the at least one constraint limiting the potentially possible positions of the base (9) is a possible surface to which or on which it is possible for the base (9) of the robot arm to be attached.

5. Method according to one of claims 1 to 4, additionally comprising assigning the potentially possible positions of the base (9) in coordinates of the fixed world coordinate system (K_{global}) based on the polar coordinates (p1, p2) of the reference coordinate system (K_{Ref}).

## Revendications

1 . Procédé pour limiter les positions possibles d'un bras de robot (7) d'un robot (1, 31), le bras de robot (7) comprenant un bâti (9), plusieurs éléments (9-13) disposés les uns derrière les autres et mobiles les uns par rapport aux autres par rapport à des axes (A1-A6), et des entraînements pour déplacer les éléments (9-13), le robot (1, 31) étant réalisé comme un robot mobile (31), qui présente un dispositif de support (2) mobile avec des entraînements pour déplacer le dispositif de support, sur lequel le bras de robot (7) est fixé avec son bâti (9) et le dispositif de support (2) mobile étant réalisé comme un véhicule porteur avec des roues (4) et les entraînements du dispositif de support (2) mobile étant configurés pour déplacer les roues (4), présentant les étapes de procédé suivantes :
- fixer une position de consigne et une orientation de consigne dans l'espace d'un point central d'outil (8) associé au bras de robot (7) ou à un effecteur d'extrémité fixé au bras de robot 20 (7), auquel est associé un système de coordonnées de référence (K_{Ref}) avec des coordonnées polaires (p1, p2),
- définir les positions potentiellement possibles du bâti (9) du bras de robot (7) dans l'espace et dans les coordonnées polaires (p1, p 2) du système de coordonnées de référence (K_{Ref}) en raison de la géométrie du bras de robot (7), de sorte que le Tool Center Point (8) puisse prendre la position et l'orientation de consigne déterminées,
- déterminer les positions possibles du bâti (9) du bras de robot (7) sur la base des positions possibles potentielles déterminées et d'au moins une condition marginale limitant les positions possibles potentielles du châssis (9), la condition marginale limitant les positions possibles potentielles du châssis (9) représentant une position ou un emplacement possible du dispositif de support (2), **caractérisé en ce que**
un 3-uplet (p1, p2, p3) décrit les positions possibles du véhicule porteur au moyen des coordonnées polaires (p1, p2) et au moyen de la rotation (p3) du véhicule porteur (2) dans le système de coordonnées de référence (K_{Ref}), la première coordonnée polaire (p1) du système de coordonnées de référence (K_{Ref}) décrivant la distance du véhicule porteur à l'origine du système de coordonnées de référence (K_{Ref}), la deuxième coordonnée polaire (p2) du système de coordonnées de référence (K_{Ref}) décrivant la direction d'approche du véhicule porteur sur un cercle de distance (K) de rayon ρ1, et la rotation (ρ3) décrivant l'orientation du véhicule porteur par rapport au système de coordonnées de référence (K_{Ref}).

2. Procédé selon la revendication 1, comprenant en outre la fixation de la position de consigne et de l'orientation de consigne du Tool Center Point (8) dans des coordonnées d'un système de coordonnées mondial fixe (K_{global}).

3. Procédé selon la revendication 1 ou 2, dans lequel les positions potentiellement possibles se trouvent à l'intérieur d'une sphère (17) dont le centre est le Tool Center Point (8) dans sa position de consigne.

4. Procédé selon l'une quelconque des revendications 1 à 3, dans lequel ladite au moins une condition marginale limitant les positions potentiellement possibles du bâti (9) est une surface possible contre laquelle ou sur laquelle il est possible au châssis (9) du bras de robot d'être fixé.

5. Procédé selon l'une quelconque des revendications 1 à 4, comprenant en outre la définition des positions potentiellement possibles du bâti (9) dans des coordonnées du système de coordonnées mondial établi (K_{global}) sur la base des coordonnées polaires (ρ1, ρ2) du système de coordonnées de référence (K_{Ref}).
